# EUROPÄISCHE PATENTANMELDUNG

(11) **EP 1 842 731 A1**
(43) Veröffentlichungstag der Anmeldung: **10.10.2007**
(21) Anmeldenummer: 07102327.9
(22) Anmeldetag: 14.02.2007
(51) Int. Cl.: B60R 19/18

(54) **Stoßfängersystem**

(30) Priorität: 05.04.2006 DE 102006015914
(71) Anmelder: Ford Global Technologies, LLC, Dearborn, MI 48126 (US)
(72) Erfinder: SIPIDO, Antje, 50939, Köln (DE)
(74) Vertreter: Dörfler, Thomas

(57) **Zusammenfassung**

Die Erfindung betrifft ein Stoßfängersystem für ein Kraftfahrzeug mit einer energieabsorbierenden Struktur aus Schaumstoff, einer Außenschale 8 vor der energieabsorbierenden Struktur, einem Querträger 2 hinter der energieabsorbierenden Struktur und einer Fahrzeugunterstruktur zur Befestigung von Außenschale 8 und Querträger 2. Sie ist dadurch gekennzeichnet, daß die energieabsorbierende Struktur als homogener Schaumstoffkörper 5 aus einem Schaumstoffmaterial ausgeführt ist und dieser mittels lösbarer Befestigungsmittel 7 an Befestigungspunkten 9 auf der Außenschale 8, dem Querträger 2 und/oder der Fahrzeugunterstruktur befestigt ist.

Damit können bei einer Reparatur einzelne Teile des Stoßfängersystems einfach ausgetauscht und bei der Verschrottung des Fahrzeuges die einzelnen Teile des Stoßfängersystems einfach und sortenrein entsorgt werden.

## Beschreibung

Die Erfindung betrifft ein Stoßfängersystem für ein Kraftfahrzeug mit einer energieabsorbierenden Struktur aus Schaumstoff gemäß dem Oberbegriff des Anspruchs 1.

Aus der EP 1072476 ist ein Stoßfänger für ein Kraftfahrzeug mit einer energieabsorbierenden Struktur aus einem Schaumstoff bekannt, bei der eine Außenschale vor der energieabsorbierenden Struktur und ein Querträger hinter der energieabsorbierenden Struktur angeordnet ist und diese an einer Fahrzeugunterstruktur befestigt sind.

Die Befestigung der energieabsorbierenden Struktur erfolgt dabei in der Regel durch vollflächige Verbindung mit der angrenzenden Struktur, z. B. indem der Schaumstoff in die Außenschale eingeschäumt wird. Im Falle einer Reparatur des Fahrzeuges oder beim Verschrotten des Fahrzeuges kann dann der Schaumkörper nicht ohne weiteres von den anderen Teilen separiert werden. Sowohl aus Kostengründen als auch aus rechtlichen Vorschriften ist aber eine sortenreine Wiederverwertung der Fahrzeugwerkstoffe notwendig. Bei einer vollflächigen Verbindung von Schaumstoff und Außenschale ist diese Aufgabe kaum lösbar.

Weitere bekannte Befestigungen der energieabsorbierenden Struktur erfolgen, indem in den Schaumstoff Befestigungsmittel aus anderen, härteren Materialien eingeschäumt sind und dann mittels geeigneter Befestigungsmittel, z. B. Befestigungsclipsen oder dergleichen, die energieabsorbierende Struktur am Fahrzeug befestigt ist. Auch hier ist eine sortenreine Wiederverwertung der energieabsorbierenden Struktur nur schwierig möglich, da die eingeschäumten Befestigungsmittel nur sehr aufwendig aus dem Schaumstoff hergelöst werden können.

Aufgabe der Erfindung ist die Gestaltung eines Stoßfängersystems, welches bei einer Reparatur den einfachen Austausch einzelner Teile des Stoßfängersystems und/oder welches bei der Reparatur und/oder der Verschrottung des Fahrzeuges eine einfache, insbesondere sortenreine Trennung der einzelnen Teile des Stoßfängersystems ermöglicht.

Gelöst wird diese Aufgabe mit den Merkmalen des Anspruchs 1.

Indem die energieabsorbierende Struktur als homogener Schaumstoffkörper aus einem Schaumstoffmaterial ausgeführt ist und dieser mittels lösbarer Befestigungsmittel an Befestigungspunkten auf der Außenschale, dem Querträger und/oder der Fahrzeugunterstruktur befestigt ist, kann der Schaumstoffkörper der energieabsorbierende Struktur ohne großen Aufwand im Stoßfängersystem ausgebaut bzw. ersetzt werden. Ist z. B. nach einem Unfall nur die Außenschale oder der Schaumkörper beschädigt, kann eines der beiden Teile weiterverwendet werden und nur das kaputte Teil muß ersetzt werden. Durch die einfache Trennbarkeit der Teile ist die Reparatur schnell und kostengünstig durchzuführen.

Weiterhin kann, da der Schaumstoffkörper aus einem homogenen Schaummaterial besteht, die energieabsorbierende Struktur im Falle der Verschrottung ohne größeren Trennungsaufwand direkt entsorgt bzw. der Wiederverwertung zugeführt werden. Eine umständliche Zerlegung der energieabsorbierenden Struktur in ihre einzelnen Materialbestandteile entfällt. Ein weiterer Vorteil besteht gegenüber bekannten Stoßfängersystemen, bei denen die energieabsorbierende Struktur mit der Außenschale oder anderen Teilen des Stoßfängersystems fest verbunden ist. Hier muß bei der Verschrottung das Schaummaterial umständlich von den anderen Teilen abgelöst werden. Dieser Aufwand entfällt mit dem erfindungsgemäßen Stoßfängersystem.

Vorteilhaft sind die lösbaren Befestigungsmittel als am Schaumstoffkörper integrierte Befestigungsflansche aus Schaumstoff ausgeführt. Dadurch ist der Schaumstoffkörper einschließlich seiner Befestigungsmittel als homogener Schaumstoffkörper ausgeführt, bestehend aus einem einheitlichen Schaumstoffmaterial. Dies löst die gestellte Aufgabe insofern besonders vorteilhaft, als dass keine Befestigungsmittel separat entsorgt werden müssen. Alleine die Demontage des Schaumstoffkörpers bewirkt damit, daß der Schaumstoffkörper mit allen Befestigungsmitteln sortenrein aus dem Stoßfängersystem entfernt ist.

In einer weiteren vorteilhaften Ausführung erfolgt die Befestigung mittels der Befestigungsflansche, indem zumindest ein Befestigungsflansch an einem Befestigungspunkt einrastet. Dies kann erreicht werden, indem die Befestigungsflansche geeignete Ausformungen aufweisen, die an den Befestigungspunkten hinter die Struktur der anderen Teile des Stoßfängersystems greifen. Damit kann der Schaumstoffkörper durch einfaches Einrasten oder Einclipsen am Fahrzeug befestigt werden.

Weiter kann vorteilhaft die Befestigung mittels der Befestigungsflansche erfolgen, indem zumindest ein Befestigungsflansch an einem Befestigungspunkt unverrückbar gehalten wird. Dieser Flansch weist dann Abmessungen auf, die bei der Montage am Fahrzeug bzw. Stoßfängersystem einen gewissen Kraftaufwand benötigen, um an den Befestigungspunkten eine Art Presspassung zwischen dem Schaumstoffkörper und den anderen Teilen des Stoßfängersystems zu erhalten. Dies kann erreicht werden, indem ein Flansch ein leichtes Übermaß aufweist gegenüber einer Öffnung des Befestigungspunktes, so der der Flansch nach der Montage in der Öffnung gehalten wird. Es ist aber auch möglich, dass zwei oder mehr Flansche so am Schaumstoffkörper angeordnet sind, dass diese nach der Montage auf dem Stoßfängersystem sich gegeneinander an den Befestigungspunkten verspannen, weil die Abstände zwischen den Flanschen und die Abstände zwischen den Befestigungspunkten nicht gleich sind, also ein gewisses Über- oder Untermaß aufweisen. Auch diese Art der Befestigung ermöglicht eine einfache Montage, Demontage und Entsorgung des Schaumstoffkörpers.

In einer weiteren Ausführung der Erfindung sind die Befestigungsmittel als lokal begrenzte Klebeverbindungen zwischen Schaumstoffkörper und Befestigungspunkten auf Außenschale, Querträger und/oder Fahrzeugunterstruktur ausgeführt. Unter lokal begrenzten Klebeverbindungen sind Verklebungen zu verstehen, die eine begrenzte Ausdehnung gegenüber den gesamten Abmessungen des Schaumstoffkörpers aufweisen und deshalb keine vollflächige Verklebung zwischen Schaumstoffkörper und z. B. Außenschale darstellen, wie z. B. bei einem Verbundstoßfänger. Diese Verklebungen können Klebepunkte und/oder Kleberaupen sein, die in gewissen, bevorzugt regelmäßigen, Abständen auf den Schaumstoffkörper aufgebracht sind. Dabei können diese Verklebungen als Klebstoff selbst auf den Schaumstoffkörper aufgetragen werden oder in Form von Klebefolien, wie sie bei der Montage von Verkleidungsteilen weithin bekannt sind. Selbstverständlich können die Verklebungen auch zuerst auf die anderen Teile des Stoßfängersystems aufgebracht werden.

Vorteilhaft sind die Klebeverbindungen lösbar ausgeführt. Dies kann z. B. durch die Verwendung von Heißklebestoffen erreicht werden, dass heißt die Befestigungspunkte müssen bei der Demontage auf eine gewisse Temperatur erwärmt werden, dann löst sich der Schaumstoffkörper leicht von den restlichen Teilen des Stoßfängersystems ab. Aber auch alle anderen lösbaren Klebstoff können hier Verwendung finden. Dabei kann der Klebstoff auch so ausgeführt sein, dass er sich während des Betriebes des Fahrzeuges langsam von selbst auflöst. Gehalten wird der Schaumstoffkörper dann durch andere konstruktive Maßnahmen, wie z. B. die oben beschriebenen Befestigungslaschen oder der Schaumstoffkörper ist einfach zwischen den anderen Stoßfängerteilen unbeweglich eingebaut. Dann dient der lösbare Klebstoff nur als Montagehilfe, um den Schaumstoffkörper während der Montage in der richtigen Position zu halten.

In einer weiteren Ausführung sind die Klebeverbindungen lösbar derart ausgeführt, dass beim Ausbau des Schaumstoffkörpers der Schaumstoff lokal im Bereich der Klebeverbindungen bricht. Dann wird der Schaumstoffkörper bei der Demontage von den übrigen Teilen des Stoßfängersystems durch Ab- und/oder Ausbrechen gelöst. Bei geeigneter Ausgestaltung der Klebeverbindungen verbleiben nur ganz geringe Materialreste des Schaumstoffmaterials auf den Klebeverbindungen, die bei der Verschrottung selbst vernachlässigbar sind, und die bei der Reparatur des Fahrzeuges sehr einfach entfernt werden können, bevor ein neuer Schaumstoffkörper mittels der Klebeverbindungen befestigt wird.

Vorteilhaft weist der Schaumstoffkörper im Bereich der Befestigungsmittel eine abweichende, insbesondere höhere Materialdichte auf. Vor allem bei der Ausführung mit den oben genannten Befestigungslaschen kann mit der höheren Materialdichte eine höhere Festigkeit der Befestigung des Schaumstoffkörpers erreicht werden. Eine niedrigere Materialdichte im Bereich der Befestigungsmittel kann bei den oben genannten Verklebungen genutzt werden, um ein leichtere Demontage des Schaumstoffkörpers durch Ausbrechen an den Verklebungen zu erreichen. Die prozesstechnische Erzeugung unterschiedlicher Materialdichten in einem homogenen Schaumstoffmaterial ist Stand der Technik und nicht Gegenstand dieser Erfindung.

In einer Ausführung der Erfindung befinden sich Befestigungspunkte für den Schaumstoffkörper auf einem Aggregateträger. Dies erlaubt die Vormontage eines Vorderwagenmodules, das mehrere Vorderwagenbauteile wie den Aggregateträger, Motorkühler, Frontscheinwerfer und Teile des Stoßfängersystems umfasst.

In einer weiteren vorteilhaften Ausführung wird der Schaumstoffkörper von der Außenschale zwischen Außenschale und Querträger und/oder Aggregateträger unverrückbar gehalten. Dann kann der Schaumstoffkörper bei der Montage sehr einfach auf dem Querträger und/oder dem Aggregateträger an wenigen Befestigungspunkten vormontiert werden. Es ist ausreichend, daß der Schaumstoffkörper während der Montage dort unverrückbar gehalten wird. Die endgültige Befestigung erfolgt über die Montage der Außenschale, die dann den Schaumstoffkörper relativ zum Querträger in Position hält.

Erreicht werden kann dies mit allen konstruktiven Maßnahmen, die den Schaumstoffkörper unverrückbar zwischen Außenschale und Querträger halten. Dies können z. B. weitere Befestigungspunkte zwischen Außenschale und Schaumstoffkörper sein, an denen die Außenschale gegen den Schaumstoffkörper drückt und diesen damit auf den Querträger bzw. den Aggregateträger drückt. Derartige Positionierungen sind ausreichend für die Funktionalität des Schaumstoffkörpers, der im Falle eines Aufpralles auf die Außenschale die wirkenden Kräfte - vor allem beim Aufprall eines Fußgängers - abdämpft und sich dabei auf dem Querträger abstützt.

Verwendung findet das erfinderische Stoßfängersystem bei Fahrzeugen aller Art, insbesondere jedoch Kraftfahrzeugen. Dabei kann das Stoßfängersystem vorne und/oder hinten am Fahrzeug angeordnet sein. Bevorzugt eignet es sich für den vorderen Stoßfänger, da mit dieser Befestigung des Schaumstoffkörpers insbesondere die Anforderungen an den Fußgängerschutz vorteilhaft erfüllt werden können. Weiterhin nicht hinderlich für das erfinderische Konzept ist es, wenn der Schaumstoffkörper aus einem Schaumstoff, aber mit abschnittsweise unterschiedlichen Materialdichten ausgeführt ist, um wie aus dem Stand der Technik bekannt z. B. ein bestimmtes Verformungsverhalten beim Aufprall eines Fußgängers zu erzeugen.

Die Erfindung wird anhand der Figuren weiter beschrieben. Es zeigen:
- Fig. 1: eine perspektivische Ansicht des Schaumstoffkörpers, montiert auf einem Aggregateträger;
- Fig. 2a: einen Schnitt durch den montierten Schaumstoffkörper in Höhe eines Befestigungsflansches; und
- Fig. 2b: einen Schnitt durch den montierten Schaumstoffkörper neben einem Befestigungsflansch.

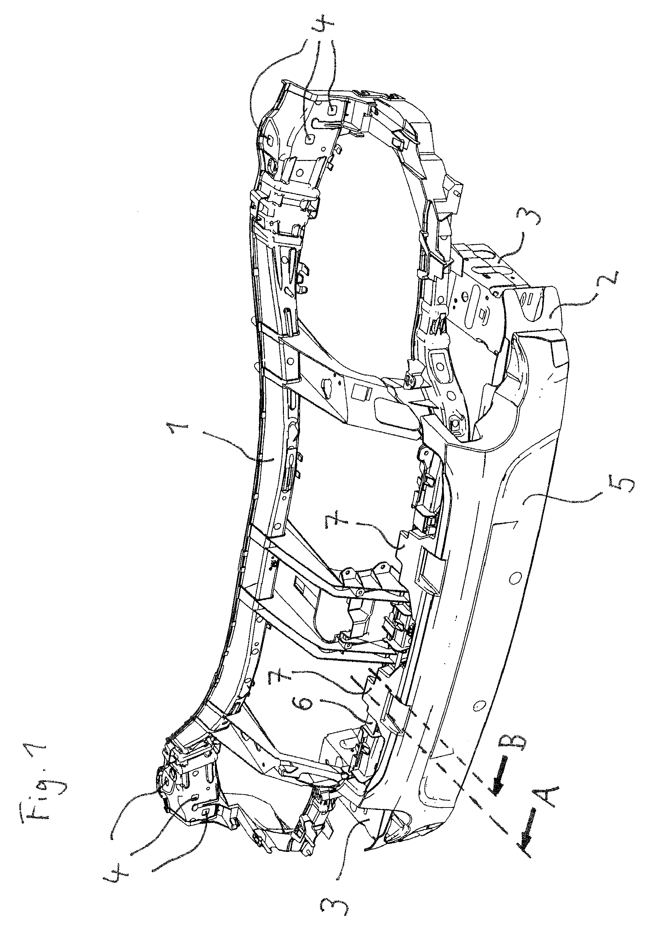

Fig.1 stellt eine perspektivische Ansicht eines nicht-komplettierte Vorderwagenmodules für ein Personenkraftfahrzeug dar, dessen wesentliche tragende Struktur durch den Aggregateträger 1 und den Querträger 2 gebildet ist. Das komplette Vorderwagenmodul kann je nach Ausführung noch die nicht dargestellte Außenschale des Stoßfängersystems, Frontscheinwerfer, Motorenkühler, Getriebekühler, Motorhaubenschlösser usw. beinhalten. Der Querträger 2 ist über die vorderen Längsträgerabschnitte 3 an den nicht dargestellten unteren Längsträgern des Fahrzeuges befestigt. Über Anschraubpunkte 4 ist der Aggregateträger an die nicht dargestellten oberen Längsträgern des Fahrzeuges befestigt. Der Schaumstoffkörper 5 ist am unteren Trägerblech 6 des Aggregateträgers 1 mittels des Befestigungsflansches 7 eingehängt.

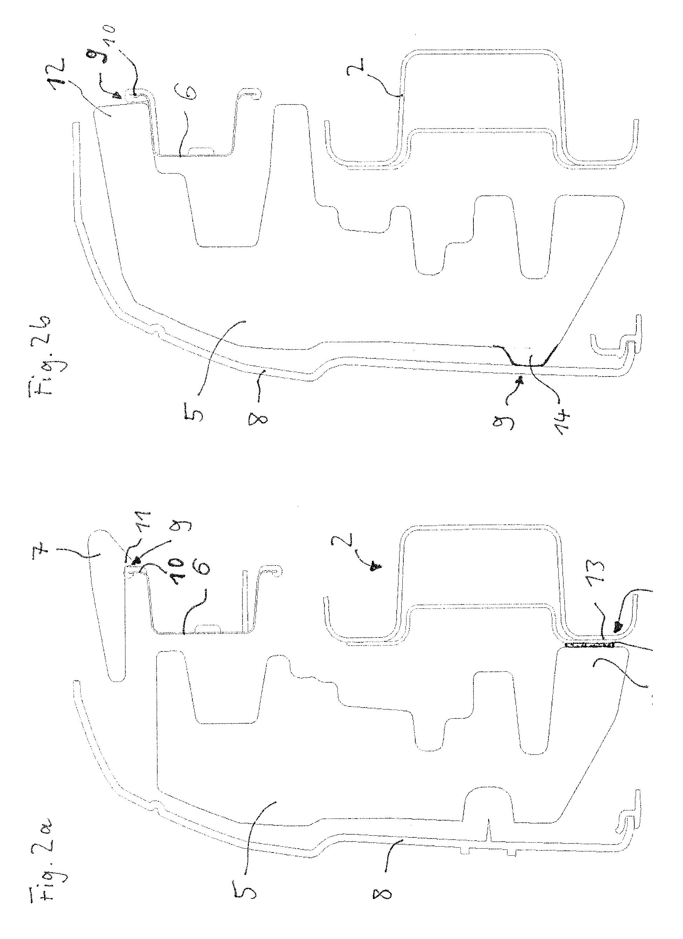

Fig. 2a ist der Schnitt A aus Fig. 1 durch das erfindungsgemäße Stoßfängersystems am Befestigungflansch 7; Fig. 2b der Schnitt B aus Fig. 1 durch das erfindungsgemäße Stoßfängersystem neben dem Befestigungsflansch 7. Dabei ergibt sich die Positionierung des Schaumstoffkörpers 5 zwischen der Außenschale 8 und dem Querträger 2 aus der dargestellten Funktionalität des Stoßfängersystems in den beiden Schnitten der Figuren 2a und 2b.

Ein erster Befestigungspunkt 9 zwischen Schaumstoffkörper 5 und Aggregateträger 1 wird am Befestigungsflansch 7 gebildet, wobei der Befestigungsflansch 7 das Befestigungsmittel darstellt. Dazu weist der Befestigungsflansch 7 einen Absatz 10 auf, der hinter den Hutflansch 11 des Trägerbleches 6 greift, siehe Fig. 2a. Neben dem Befestigungsflansch 7 wird ein weiterer Befestigungspunkt 9 gebildet, siehe Fig. 2b, indem der Schaumstoffkörper 5 einen Auflageabschnitt 12 ausformt, der auf der dem Absatz 10 gegenüberliegenden Seite des Hutflansches 11 an demselbigen anliegt. Weiterhin stützt sich der Auflageabschnitt 12 auch auf dem Trägerblech 6 in vertikaler Richtung ab. Damit ist der Schaumstoffkörper 5 relativ zum Aggregateträger 1 in Position gehalten, zumindest wenn er in aufrechter - so wie in der Zeichnung dargestellt - Lage am Aggregateträger 1 montiert ist.

Ein weiterer Befestigungspunkt 9 ist zwischen dem Querträger 2 und dem Schaumstoffkörper 5 am unteren Schweißflansch 13 des Querträgers 2 gebildet, indem am Schaumstoffkörper 5 ein Anlageabschnitt 14 - dieser stellt das Befestigungsmittel dar - ausgebildet ist, der am Schweißflansch 13 anliegt, siehe Fig. 2a. Damit ist eine Bewegung des Schaumstoffkörpers 5 in Längsrichtung relativ zum Querträger 2 - zumindest in Fahrtrichtung gesehen nach hinten - behindert. Damit auch die Bewegung relativ nach vorne unterbunden wird, ist an diesem Befestigungspunkt 9 eine Verklebung 15, die hier z. B. mittels einer Klebefolie ausgeführt sein kann, angebracht.

Zur Positionierung des Schaumstoffkörpers 5 ist ein weiterer Befestigungspunkt 9 zwischen Außenschale 8 und Schaumstoffkörper 5 vorgesehen, der mittels eines weiteren Anlageabschnittes 14 als Befestigungsmittel ausgeführt ist, siehe Fig. 2b. Mittels der beiden Anlagenabschnitte 14 aus Fig. 2a und 2b wird der Schaumstoffkörper 5 zwischen der Außenschale 8 und dem Querträger 2 positioniert und festgehalten. Die in Querrichtung gesehene Versetzung der beiden Anlagenabschnitte 14 erlaubt einen Toleranzausgleich durch leichte Verformung des Schaumstoffkörpers 5, wenn der freie Abstand zwischen Außenschale 8 und Querträger 2 im Bereich dieser Befestigungspunkte 9 umwelt- oder fertigungsbedingten Schwankungen unterworfen ist.

Die Montage des Schaumstoffkörpers erfolgt, indem dieser an den Befestigungslaschen in das Trägerblech 6 des Aggregateträgers 1 eingehängt wird. In einem späteren Arbeitsschritt, der nicht direkt auf danach kommen muß, wird die Außenschale 8 mit dem restlichen Stoßfängersystem verbunden. Durch die Anordnung der verschiedenen Befestigungspunkte 9 ist der Schaumstoffkörper 5 automatisch zwischen Außenschale 8 und Querträger 2 positioniert und gehalten. Bei der Demontage wird zunächst die Außenschale 8 entfernt. Dann läßt sich der Schaumstoffkörper 5 durch Lösen vom Trägerblech 6 am Befestigungsflansch 7 leicht und zerstörungsfrei vom Fahrzeug entfernen.

### Bezugszeichenliste

- 1: Aggregateträger 1
- 2: Querträger
- 3: Längsträgerabschnitte
- 4: Anschraubpunkte
- 5: Schaumstoffkörper 5
- 6: Trägerblech
- 7: Befestigungsflansch
- 8: Außenschale
- 9: Befestigungspunkt
- 10: Absatz (am Befestigungsflansch 7)
- 11: Hutflansch (des Trägerblechs 6)
- 12: Auflageabschnitt
- 13: Schweißflansch
- 14: Anlagenabschnitt
- 15: Verklebung

## Patentansprüche

1. Stoßfängersystem, insbesondere für ein Kraftfahrzeug, mit einer energieabsorbierenden Struktur aus Schaumstoff, einer Außenschale (8) vor der energieabsorbierenden Struktur, einem Querträger (2) hinter der energieabsorbierenden Struktur und einer Fahrzeugunterstruktur zur Befestigung von Außenschale (8) und Querträger (2),
**dadurch gekennzeichnet, daß**
die energieabsorbierende Struktur als homogener Schaumstoffkörper (5) aus einem Schaumstoffmaterial ausgeführt ist und dieser mittels lösbarer Befestigungsmittel (7, 12, 14) an Befestigungspunkten (9) auf der Außenschale (8), dem Querträger (2) und/oder der Fahrzeugunterstruktur befestigt ist.

2. Stoßfängersystem nach Anspruch 1,
**dadurch gekennzeichnet, daß**
ein lösbares Befestigungsmittel als ein am Schaumstoffkörper (5) integrierter Befestigungsflansch (7) aus Schaumstoff ausgeführt ist.

3. Stoßfängersystem nach Anspruch 2,
**dadurch gekennzeichnet, daß**
die Befestigung mittels des Befestigungsflansches (7) erfolgt, indem der Befestigungsflansch (7) an einem Befestigungspunkt (9) einrastet.

4. Stoßfängersystem nach Anspruch 2 oder 3,
**dadurch gekennzeichnet, daß**
die Befestigung mittels der Befestigungsflansche erfolgt, indem zumindest ein Befestigungsflansch an einem Befestigungspunkt unverrückbar gehalten wird.

5. Stoßfängersystem nach einem der vorherigen Ansprüche,
**dadurch gekennzeichnet, daß**
Befestigungsmittel als lokal begrenzte Klebeverbindungen (15) zwischen Schaumstoffkörper (5) und Befestigungspunkten (9) auf Außenschale (5), Querträger (2) und/oder Fahrzeugunterstruktur ausgeführt sind.

6. Stoßfängersystem nach einem der vorherigen Ansprüche,
**dadurch gekennzeichnet, daß**
die Klebeverbindungen lösbar ausgeführt sind.

7. Stoßfängersystem nach einem der vorherigen Ansprüche,
**dadurch gekennzeichnet, daß**
die Klebeverbindungen lösbar derart ausgeführt sind, dass beim Ausbau des Schaumstoffkörpers der Schaumstoff lokal im Bereich der Klebeverbindungen bricht.

8. Stoßfängersystem nach einem der vorherigen Ansprüche,
**dadurch gekennzeichnet, daß**
der Schaumstoffkörper im Bereich der Befestigungsmittel eine abweichende, insbesondere höhere Materialdichte aufweist.

9. Stoßfängersystem nach einem der vorherigen Ansprüche,
**dadurch gekennzeichnet, daß**
sich Befestigungspunkte (9) für den Schaumstoffkörper (5) auf einem Aggregateträger (1) der Fahrzeugunterstruktur befinden.

10. Stoßfängersystem nach einem der vorherigen Ansprüche,
**dadurch gekennzeichnet, daß**
der Schaumstoffkörper (5) von der Außenschale (8) zwischen Außenschale (8) und Querträger (2) und/oder Aggregateträger (1) unverrückbar gehalten wird.

11. Fahrzeug mit einem Stoßfängersystem nach einem der vorherigen Ansprüche, wobei das Stoßfängersystem vorne und/oder hinten am Fahrzeug angeordnet ist.
